# EUROPÄISCHE PATENTSCHRIFT

(11) **EP 3 308 997 B1**
(45) Veröffentlichungstag und Bekanntmachung des Hinweises auf die Patenterteilung: **24.03.2021**
(21) Anmeldenummer: 17184662.9
(22) Anmeldetag: 03.08.2017
(51) Int. Cl.: B60L 7/10

(54) **KRAFTFAHRZEUG UND VERFAHREN ZUM BETREIBEN EINES KRAFTFAHRZEUGS**
MOTOR VEHICLE AND METHOD FOR OPERATING A MOTOR VEHICLE
VÉHICULE AUTOMOBILE ET PROCÉDÉ DE FONCTIONNEMENT D'UN VÉHICULE AUTOMOBILE

(30) Priorität: 29.09.2016 DE 102016218814
(43) Veröffentlichungstag der Anmeldung: 18.04.2018
(73) Patentinhaber: AUDI AG, 85045 Ingolstadt (DE)
(72) Erfinder: Kopp, Andreas, 85092 Kösching (DE); Dreher, Dominik, 85049 Ingolstadt (DE)

(56) Entgegenhaltungen:
- EP-A1- 2 693 592
- DE-A1-102007 017 021
- DE-A1-102013 012 164
- DE-T2- 69 201 094
- DE-U1-202014 103 290
- JP-A- 2009 026 563

## Beschreibung

Die Erfindung betrifft ein Kraftfahrzeug, umfassend wenigstens eine Antriebsstrangkomponente und/oder wenigstens ein Radlager.

Kraftfahrzeuge umfassen einen Antriebsstrang, der über Antriebsstrangkomponenten von einer Verbrennungskraftmaschine und/oder einem Elektromotor erzeugte Antriebsleistung auf die durch Radlager gelagerten Räder und somit zur Bewegung des Kraftfahrzeugs auf den Fahrzeuguntergrund überträgt. Dabei werden zur Verringerung der Reibung in den Antriebsstrangkomponenten und/oder den Radlagern Schmiermittel eingesetzt, die den Wirkungsgrad der Leistungsübertragung erheblich verbessern. In Druckschrift DE102007017021 A1 wird kinetische und potentielle Energie eines Hybridkraftfahrzeugs über eine Elektromaschine rekuperiert und entweder einer Traktionsbatterie oder einer Mehrzahl von Verbrauchern zugeführt.

Allerdings weisen typischerweise verwendete Schmiermittel bei niedrigen Temperaturen eine höhere Viskosität als bei höheren Temperaturen auf. Beispielsweise im Fall eines Kaltstarts des Kraftfahrzeugs bei niedrigen Umgebungstemperatur treten so erhebliche Wirkungsgradeinbußen auf, die die Energieeffizienz des Kraftfahrzeugs einschränken.

Der Erfindung liegt mithin die Aufgabe zugrunde, die Leistungsübertragung über den Antriebsstrang des Kraftfahrzeugs energieeffizienter und aufwandsarm auszugestalten.

Diese Aufgabe wird erfindungsgemäß bei einem Kraftfahrzeug der eingangs genannten Art dadurch gelöst, dass eine zum Erwärmen der Antriebsstrangkomponente und/oder des Radlagers ausgebildete Heizeinrichtung, eine Rekuperationsbremse und ein Gleichspannungswandler vorgesehen sind, welcher eingangsseitig mit der Rekuperationsbremse und ausgangsseitig mit der Heizeinrichtung verbunden und zur Absenkung einer Spannungslage einer von der Rekuperationsbremse bereitgestellten Rekuperationsleistung ausgebildet ist, und durch weitere Merkmale nach Anspruch 1.

Die Erfindung beruht auf der Überlegung, beim Verzögern des Kraftfahrzeugs mittels der Rekuperationsbremse in elektrische Energie gewandelte kinetische Energie zum Betreiben der Heizeinrichtung zu verwenden, welche die Antriebsstrangkomponente bzw. das Radlager erwärmt, und so, insbesondere durch Verringern der Viskosität von dort zur Reibungsreduktion eingebrachten Schmiermitteln, eine Verbesserung des Wirkungsgrads der Antriebsstrangkomponente bzw. des Radlagers zu erzielen. Dabei macht es sich die Erfindung zunutze, dass in Betriebszuständen des Kraftfahrzeugs, in denen die Antriebsstrangkomponente und/oder das Radlager erwärmt werden sollen, typischerweise auch eine Batterie des Kraftfahrzeugs, die zur Speicherung der Rekuperationsleistung verschaltet ist, temperaturbedingt nur ein eingeschränktes Ladevermögen aufweist. Mit anderen Worten wird der Anteil der Rekuperationsleistung, der nicht effizient in der Batterie speicherbar ist, zum Erwärmen der Antriebsstrangkomponente und/oder des Radlagers verwendet und kann so trotz eingeschränkten Ladevermögens zur Verbesserung des Gesamtwirkungsgrads des Kraftfahrzeugs genutzt werden. Bevorzugt sind als Antriebsstrangkomponente oder Antriebstrangkomponenten ein Getriebe und/oder ein Differenzial des Kraftfahrzeugs vorgesehen.

Ein Zusatzvorteil der Erfindung ergibt sich aus der Verwendung des Gleichspannungswandlers, der zwischen die Rekuperationsbremse und die Heizeinrichtung geschaltet ist. Nachdem typischerweise die Rekuperationsleistung in ein Hochvoltbordnetz des Kraftfahrzeugs mit der als Hochvoltbatterie ausgebildeten Batterie eingespeist wird, kann die Heizeinrichtung des erfindungsgemäßen Kraftfahrzeugs mit einer geringeren Spannung als bei einer direkten Versorgung aus der Rekuperationsbremse betrieben werden, was eine besonders aufwandsarme Realisierung der Heizeinrichtung ermöglicht. Durch die abgesenkte Spannungslage der der Heizeinrichtung zugeführten Rekuperationsleistung kann nämlich häufig auf besondere Maßnahmen beim Umgang mit Hochvoltverbrauchern, wie einen aufwändigen Berührschutz, verzichtet werden. Vor dem Hintergrund der geringen Verlustleistung moderner Gleichspannungswandler von typischerweise 6 bis 10 Watt bei einer Heizleistung von beispielsweise 300 bis 500 Watt ist der Einfluss auf die Gesamtenergiebilanz vernachlässigbar.

Hinsichtlich der konkreten Anordnung des Gleichspannungswandlers ist es zum einen möglich, dass dieser das die Batterie und die Rekuperationsbremse aufweisende Hochvoltbordnetz des Kraftfahrzeugs mit einem Niedervoltbordnetz des Kraftfahrzeugs, dem die Heizeinrichtung und weitere Niedervoltverbraucher zugeordnet sind, koppelt. Alternativ ist es möglich, dass die Heizeinrichtung in einem von einem Niedervoltbordnetz getrennten Teilbordnetz des Kraftfahrzeugs angeordnet ist, wobei insbesondere die Gesamtzahl der elektrischen Verbraucher im Niedervoltbordnetz höherer ist als die Gesamtzahl der Verbraucher im die Heizeinrichtung aufweisenden Teilbordnetz sein kann.

Beim erfindungsgemäßen Kraftfahrzeug kann mittels des Gleichspannungswandlers eine ausgangsseitige Spannung von höchstens 60 Volt bereitstellbar sein. Typischerweise kann unterhalb einer solchen Spannung auf die aufwändigen Berührschutzmaßnahmen verzichtet werden. Diese Spannung kann auch als Abgrenzung zwischen dem Hochvoltbordnetz und dem Niederspannungsbordnetz angesehen werden, wobei ein Niederspannungsbordnetz insbesondere Nennspannungen von 12 Volt, 24 Volt, 36 Volt oder 48 Volt aufweist.

Gemäß der Erfindung ist eine Steuereinrichtung vorgesehen, mittels welcher die Heizeinrichtung und/oder der Gleichspannungswandler in Abhängigkeit von Betriebsinformationen und/oder Umgebungsinformationen des Kraftfahrzeugs ansteuerbar ist. Dadurch wird gewährleistet, dass das Erwärmen der Antriebstrangkomponenten und/oder des Radlagers nur bei Bedarf erfolgt, insbesondere dann, wenn durch das Erwärmen eine Verbesserung des Gesamtwirkungsgrads erwartet werden kann. Die Steuereinrichtung kann dazu eingerichtet sein, die Heizeinrichtung zu aktivieren und/oder die durch sie zu erzeugende Heizleistung vorzugeben. Analog dazu kann die Steuereinrichtung dazu eingerichtet sein, den Gleichspannungswandler bedarfsweise zu aktivieren und zu deaktivieren, so dass der Einfluss der Verlustleistung des Gleichspannungswandlers auf den Gesamtwirkungsgrad weitestgehend minimiert wird.

Erfindungsgemäß ist die Steuereinrichtung zur Durchführung eines die Betriebsinformationen und/oder die Umgebungsinformationen auswertenden, ein Wirkungsgradmodell der Antriebsstrangkomponente und/oder des Radlagers beschreibenden Regelungsalgorithmus eingerichtet, wobei anhand des Wirkungsgradmodells die der Heizeinrichtung bereitzustellende Heizleistung und/oder eine Verteilung der Heizleistung auf die Antriebsstrangkomponente oder Antriebstrangkomponenten und/oder das oder die Radlager ermittelbar ist. Die Steuereinrichtung kann beispielsweise als Mikrocontroller oder anwendungsspezifischer Schaltkreis (ASIC) ausgebildet sein, in welchem der Regelungsalgorithmus implementiert ist. Hinsichtlich des Wirkungsgradmodells wird es bevorzugt, wenn für die oder eine jeweilige Antriebsstrangkomponente und/oder das oder ein jeweiliges Radlager ein Kennfeld hinterlegt ist, das dessen Wirkungsgrad in Abhängigkeit zumindest eines Teils der Betriebsinformationen und/oder der Umgebungsinformationen beschreibt. Mit anderen Worten bildet das Wirkungsgradmodell den temperaturabhängigen Wirkungsgrad der oder einer jeweiligen Antriebsstrangkomponente und/oder des oder eines jeweiligen Radlagers ab. Auf Basis dieser Kennfelder kann mittels eines durch den Regelungsalgorithmus beschriebenen Optimierungsverfahrens eine optimale Verteilung der Heizleistung ermittelbar sein. Die Heizeinrichtung kann ferner mehrere Heizelemente umfassen, wobei ein jeweiliges Heizelement einer zu heizenden Antriebsstrangkomponente beziehungsweise einem zu heizenden Radlager zugeordnet ist, wobei ein jeweiliges Heizelement durch die Steuereinrichtung ansteuerbar ist.

Es wird ferner besonders bevorzugt, wenn die Betriebsinformationen einen Ladezustand und/oder eine Batterietemperatur der Batterie des Kraftfahrzeugs, welche zur Speicherung der Rekuperationsleistung verschaltet ist, beschreibt. Auf Grundlage des Ladezustand (State of Charge - SoC) und der Batterietemperatur kann beispielsweise das Aufnahmevermögen der Batterie für die Rekuperationsleistung ermittelt und so abgeleitet werden, welcher Anteil der Rekuperationsleistung für den Betrieb der Heizeinrichtung bereitsteht. Dabei kann alternativ oder zusätzlich vorgesehen sein, dass die Betriebsinformationen wenigstens eine an der oder einer Antriebsstrangkomponente und/oder an dem oder einem Radlager erfasste Temperatur beschreiben. Aus solchen Betriebsinformationen lässt sich ableiten, ob das Heizen einer Antriebsstrangkomponente bzw. eines Radlagers zu einer weiteren Wirkungsgradverbesserung führt. Zweckmäßigerweise sind dazu an den Antriebsstrangkomponenten und/oder den Radlagern Temperatursensoren vorgesehen.

Daneben ist es besonders vorteilhaft, wenn die Umgebungsinformationen eine Umgebungstemperatur des Kraftfahrzeugs beschreiben, wobei die Umgebungstemperatur alternativ oder zusätzlich zum Ladezustand bei der Ermittlung des zum Betrieb Heizeinrichtung zu verwendenden Anteils der Rekuperationsleistung herangezogen werden kann. Gegebenenfalls kann, beispielsweise beim Kaltstart des Kraftfahrzeugs, aus der Umgebungstemperatur auch auf die Temperatur der Antriebstrangkomponenten und/oder der Radlager geschlossen werden. Daneben können die Umgebungsinformationen prädiktive oder durch eine Navigationseinrichtung bereitgestellte Streckendaten beschreiben. Aus solchen Streckendaten lässt sich das zukünftige Fahrverhalten des Kraftfahrzeugs ermitteln und eine vorausschauende Regelung der Verteilung der Heizleistung realisieren.

Schließlich kann die Steuereinrichtung dazu eingerichtet sein, das Erwärmen bei Erreichen eines Schwellwerts durch die Temperatur und/oder den Ladezustand zu beginnen. Der Schwellwert beschreibt beispielsweise eine Grenztemperatur, unterhalb welcher der Betrieb der Heizeinrichtung beginnt. Analog dazu kann ein Grenzladezustand definiert sein, oberhalb dessen der Betrieb der Heizeinrichtung beginnt.

Die der Erfindung zugrunde liegende Aufgabe wird ferner gelöst durch ein Verfahren zum Betreiben eines Kraftfahrzeugs, wobei wenigstens eine Antriebsstrangkomponente und/oder wenigstens ein Radlager des Kraftfahrzeugs mittels einer Heizeinrichtung erwärmt wird, und ein Gleichspannungswandler, welcher eingangsseitig mit einer Rekuperationsbremse und ausgangsseitig mit der Heizeinrichtung verbunden ist, eine Spannungslage einer von der Rekuperationsbremse bereitgestellten Rekuperationsleistung absenkt.

Bei dem erfindungsgemäßen Verfahren kann vorgesehen sein, dass der Gleichspannungswandler eine ausgangsseitige Spannung von höchstens 60 Volt bereitstellt.

Gemäß des erfindungsgemäßen Verfahrens steuert eine Steuereinrichtung des Kraftfahrzeugs die Heizeinrichtung und/oder den Gleichspannungswandler in Abhängigkeit von Betriebsinformationen und/oder Umgebungsinformationen des Kraftfahrzeugs an.

Zusätzlich soll die Steuereinrichtung einen die Betriebsinformationen und/oder die Umgebungsinformationen auswertenden, ein Wirkungsgradmodell der Antriebsstrangkomponente und/oder des Radlagers beschreibenden Regelungsalgorithmus ausführen, wobei anhand des Wirkungsgradmodells die der Heizeinrichtung bereitzustellende Heizleistung und/oder eine Verteilung der Heizleistung auf Antriebsstrangkomponenten und/oder das oder die Radlager ermittelt wird.

Es wird besonders bevorzugt, wenn die Betriebsinformationen einen Ladezustand und/oder eine Batterietemperatur einer Batterie des Kraftfahrzeugs, welche zur Speicherung der Rekuperationsleistung verschaltet ist, und/oder wenigstens eine an der Antriebsstrangkomponente und/oder an dem Radlager erfasste Temperatur beschreiben und/oder die Umgebungsinformationen eine Umgebungstemperatur des Kraftfahrzeugs und/oder prädiktive oder durch eine Navigationseinrichtung bereitgestellte Streckendaten beschreiben.

Zweckmäßigerweise beginnt die Steuereinrichtung das Erwärmen bei Erreichen eines Schwellwerts durch die Temperatur und/oder den Ladezustand.

Sämtliche Ausführungen zum erfindungsgemäßen Kraftfahrzeug lassen sich analog auf das erfindungsgemäße Verfahren übertragen, so dass auch mit diesem die zuvor genannten Vorteile erzielt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines Ausführungsbeispiel eines erfindungsgemäßen Kraftfahrzeugs;
- Fig. 2: eine Prinzipskizze eines weiteren Ausführungsbeispiel eines erfindungsgemäßen Kraftfahrzeugs.

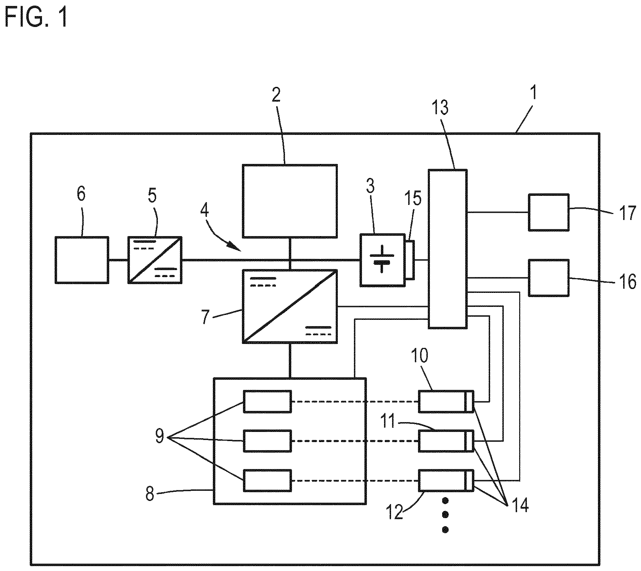

Fig. 1 zeigt eine Prinzipskizze eines Kraftfahrzeugs 1 mit einer Rekuperationsbremse 2, die beim Verzögern des Kraftfahrzeugs 1 eine Rekuperationsleistung in ein eine Batterie 3 aufweisendes Hochvoltbordnetz 4 eingespeist.

Dieses ist ferner über ein Koppelgleichspannungswandler 5 mit einem Niedervoltbordnetz 6, das eine Vielzahl von nicht gezeigten Verbrauchern des Kraftfahrzeugs versorgt, gekoppelt und weist eine Nennspannung von beispielsweise 12, 24, 36 oder 48 Volt auf.

Zusätzlich umfasst das Kraftfahrzeug 1 einen weiteren Gleichspannungswandler 7, der eingangsseitig mit der Rekuperationsbremse 2 und ausgangsseitig mit einer Heizeinrichtung 8 verbunden ist. Diese weist mehrere Heizelemente 9 auf, die mit mehreren Antriebsstrangkomponenten 10, 11 und mehreren Radlagern 12, wovon aus Gründen der Übersichtlichkeit lediglich ein einziges dargestellt ist, thermisch gekoppelt sind. Dabei ist die Antriebsstrangkomponente 10 ein Getriebe und die Antriebsstrangkomponente 11 ein Differenzial des Kraftfahrzeugs 1. Bekanntermaßen ist der Gesamtwirkungsgrad des Kraftfahrzeugs 1 hinsichtlich der Übertragung der von einem Verbrennungsmotor und/oder einem Elektromotor erzeugten Antriebsleistung abhängig von der Temperatur der Antriebsstrangkomponenten 10, 11 und der Radlager 12, da zur Reduktion der Reibung verwendete Schmiermittel bei höheren Temperaturen eine bessere Schmierwirkung aufweisen als bei geringen Temperaturen. Die Spannungslage der von der Rekuperationsbremse 2 an die Heizeinrichtung 8 bereitgestellten Rekuperationsleistung wird dabei mittels des Gleichspannungswandlers 7 auf eine Spannung unterhalb von 60 Volt, mindestens jedoch auf beispielsweise 12 Volt abgesenkt, so dass auf aufwändige Berührschutzmaßnahmen verzichtet werden kann.

Das Kraftfahrzeug 1 zeichnet sich dadurch aus, dass es eine Steuereinrichtung 13 aufweist, welche als Eingangsdaten Betriebsinformationen erhält, die die Temperaturen der Antriebsstrangkomponenten 10, 11 und der Radlager 12 beschreiben. Dazu sind an den Antriebstrangkomponenten 10, 11 und den Radlagern 12 Temperatursensoren 14 vorgesehen. Die Betriebsinformationen beschreiben ferner den Ladezustand (State of Charge - SOC) und die Temperatur der Batterie 3, welche von einem Batteriesteuergerät 15 bereitgestellt werden. Weitere Eingangsdaten in Form von Umgebungsinformationen erhält die Steuereinrichtung 13 von einem Navigationssystem 16 des Kraftfahrzeugs, welches die künftige Fahrstrecke beschreibende Streckendaten bereitstellt. Alternativ dazu ist auch einer andersartige Ermittlung von prädiktiven Streckendaten, beispielsweise auf Basis eines vom Fahrer des Kraftfahrzeugs 1 bestimmten Fahrprofils, möglich. Die Umgebungsinformationen beschreiben ferner eine mittels eines Umgebungstemperatursensors 17 ermittelte Umgebungstemperatur des Kraftfahrzeugs 1.

Die Steuereinrichtung 13 umfasst einen Mikrocontroller oder einen anwendungsspezifischen Schaltkreis (ASIC), durch welchen ein ein Wirkungsgradmodell der Antriebsstrangkomponente 10, 11 und der Radlager 12 beschreibender Regelungsalgorithmus implementiert ist. Anhand dieses Wirkungsgradmodells werden die von der Heizeinrichtung 8 bereitzustellende Heizleistung und die Verteilung dieser Heizleistung auf die Antriebsstrangkomponenten 10, 11 und die Radlager 12 ermittelt. Dazu sind in der Steuereinrichtung 13 Kennfelder des Wirkungsgrads der einzelnen Antriebsstrangkomponenten 10, 11 und der Radlager 12, beispielsweise in Form von Look-Up-Tabellen, hinterlegt.

Die Steuereinrichtung 13 ermittelt anhand der die Temperaturen der Antriebsstrangkomponenten 10, 11 und der Radlager 12 beschreibenden Betriebsinformationen zunächst, ob eine oder mehrere dieser Temperaturen einen Schwellwert in Form einer Grenztemperatur unterschreiten und/oder der Ladezustand der Batterie 3 einen Grenzladezustand überschreitet. Ist das der Fall, ermittelt die Steuereinrichtung 13 anhand der den Ladezustand und die Temperatur der Batterie 3 beschreibenden Betriebsinformationen, welcher Anteil der Rekuperationsleistung in der Batterie 3 speicherbar ist und welcher Anteil der Rekuperationsleistung für den Betrieb der Heizeinrichtung 8 bereitsteht. Anschließend ermittelt der modellbasierte Regelungsalgorithmus auf Basis der von den Temperatursensoren 14 bereitgestellten Betriebsinformationen und der Streckendaten unter Rückgriff auf die Kennfelder eine wirkungsgradoptimale Verteilung der Heizleistung auf die Antriebsstrangkomponenten 10, 11 und die Radlager 12. Dabei berücksichtigt die Steuereinrichtung 13 zusätzlich die Streckendaten für eine vorausschauende Planung der Verteilung der Heizleistung. Alternativ oder zusätzlich zur Berücksichtigung deren Temperaturen kann auch die mittels des Umgebungstemperatursensors 17 erfasste Umgebungstemperatur verwendet werden. Die Steuereinrichtung 13 aktiviert dann den Gleichspannungswandler 7 zum Erlauben eines Leistungstransports von der Rekuperationsbremse 2 zur Heizeinrichtung 8 und steuert die Heizelemente 9 entsprechend der wirkungsgradoptimalen Verteilung der Heizleistung an.

Mithin kann die überschüssige, nicht von der Batterie 3 aufnehmbare Rekuperationsleistung zum Erwärmen der Antriebstrangkomponenten 10, 11 und der Radlager 12 verwendet werden. Durch diese Erwärmung kann zügig, insbesondere nach einem Kaltstart des Kraftfahrzeugs 1, ein optimaler Betriebszustand hinsichtlich der Übertragung der Antriebsleistung an die Räder des Kraftfahrzeugs 1 erreicht werden.

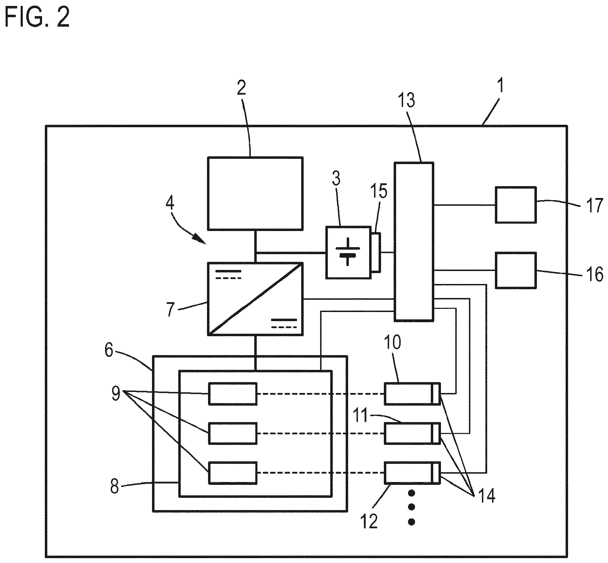

Fig. 2 zeigt eine Prinzipskizze eines weiteren Ausführungsbeispiels eines Kraftfahrzeugs 1, welches sich von dem in Fig. 1 gezeigten Ausführungsbeispiel dadurch unterscheidet, dass die Heizeinrichtung 8 Teil des Niedervoltbordnetzes 6 ist, also neben den weiteren Verbrauchern des Kraftfahrzeugs 1 von einer nicht gezeigten Niedervoltbatterie und der gewandelten Rekuperationsleistung mit einer Nennspannung von beispielsweise 12, 24, 36 oder 48 Volt versorgt wird. Der Gleichspannungswandler 7 übernimmt in diesem Fall auch die Funktion des Koppelgleichspannungswandlers 5.

## Patentansprüche

1. Kraftfahrzeug, umfassend wenigstens eine Antriebsstrangkomponente (10, 11) und/oder wenigstens ein Radlager (12), wobei eine zum Erwärmen der Antriebsstrangkomponente (10, 11) und/oder des Radlagers (12) ausgebildete Heizeinrichtung (8), eine Rekuperationsbremse (2) und ein Gleichspannungswandler (7) vorgesehen sind, welcher eingangsseitig mit der Rekuperationsbremse (2) und ausgangsseitig mit der Heizeinrichtung (8) verbunden und zur Absenkung einer Spannungslage einer von der Rekuperationsbremse (2) bereitgestellten Rekuperationsleistung ausgebildet ist, wobei eine Steuereinrichtung (13) vorgesehen ist, mittels welcher die Heizeinrichtung (8) und/oder der Gleichspannungswandler (7) in Abhängigkeit von Betriebsinformationen und/oder Umgebungsinformationen des Kraftfahrzeugs (1) ansteuerbar ist, wobei die Steuereinrichtung (13) zur Durchführung eines die Betriebsinformationen und/oder die Umgebungsinformationen auswertenden, ein Wirkungsgradmodell der Antriebsstrangkomponente (10, 11) und/oder des Radlagers (12) beschreibenden Regelungsalgorithmus eingerichtet ist, wobei anhand des Wirkungsgradmodells die der Heizeinrichtung (8) bereitzustellende Heizleistung und/oder eine Verteilung der Heizleistung auf die Antriebsstrangkomponente (10, 11) oder Antriebstrangkomponenten und/oder das oder die Radlager (12) ermittelbar ist.

2. Kraftfahrzeug nach Anspruch 1,
**dadurch gekennzeichnet,**
**dass** mittels des Gleichspannungswandlers (7) eine ausgangsseitige Spannung von höchstens 60 Volt bereitstellbar ist.

3. Kraftfahrzeug nach Anspruch 1 oder 2 **dadurch gekennzeichnet,**
**dass** die Betriebsinformationen einen Ladezustand und/oder eine Batterietemperatur einer Batterie (3) des Kraftfahrzeugs (1), welche zur Speicherung der Rekuperationsleistung verschaltet ist, und/oder wenigstens eine an der oder einer Antriebsstrangkomponente (10, 11) und/oder an dem oder einem Radlager (12) erfasste Temperatur beschreiben und/oder die Umgebungsinformationen eine Umgebungstemperatur des Kraftfahrzeugs (1) und/oder prädiktive oder durch eine Navigationseinrichtung (16) bereitgestellte Streckendaten beschreiben.

4. Kraftfahrzeug nach Anspruch 3,
**dadurch gekennzeichnet,**
**dass** die Steuereinrichtung (13) dazu eingerichtet ist, das Erwärmen bei Erreichen eines Schwellwerts durch die Temperatur und/oder den Ladezustand zu beginnen.

5. Verfahren zum Betreiben eines Kraftfahrzeugs (1), wobei wenigstens eine Antriebsstrangkomponente (10, 11) und/oder wenigstens ein Radlager (12) des Kraftfahrzeugs (1) mittels einer Heizeinrichtung (8) erwärmt wird, und ein Gleichspannungswandler (7), welcher eingangsseitig mit einer Rekuperationsbremse (2) und ausgangsseitig mit der Heizeinrichtung (8) verbunden ist, eine Spannungslage einer von der Rekuperationsbremse (2) bereitgestellten Rekuperationsleistung absenkt, wobei eine Steuereinrichtung (13) des Kraftfahrzeugs (1) die Heizeinrichtung (8) und/oder den Gleichspannungswandler (7) in Abhängigkeit von Betriebsinformationen und/oder Umgebungsinformationen des Kraftfahrzeugs (1) ansteuert, wobei die Steuereinrichtung (13) einen die Betriebsinformationen und/oder die Umgebungsinformationen auswertenden, ein Wirkungsgradmodell der Antriebsstrangkomponente (10, 11) und/oder des Radlagers (12) beschreibenden Regelungsalgorithmus ausführt, wobei anhand des Wirkungsgradmodells die der Heizeinrichtung (8) bereitzustellende Heizleistung und/oder eine Verteilung der Heizleistung auf Antriebsstrangkomponenten (10, 11) und/oder das oder die Radlager (12) ermittelt wird.

6. Verfahren nach Anspruch 5,
**dadurch gekennzeichnet,**
**dass** der Gleichspannungswandler (7) eine ausgangsseitige Spannung von höchstens 60 Volt bereitstellt.

7. Verfahren nach Anspruch 5 oder 6,
**dadurch gekennzeichnet,**
**dass** die Betriebsinformationen einen Ladezustand und/oder eine Batterietemperatur einer Batterie (3) des Kraftfahrzeugs (1), welche zur Speicherung der Rekuperationsleistung verschaltet ist, und/oder wenigstens eine an der Antriebsstrangkomponente (10, 11) und/oder an dem Radlager (12) erfasste Temperatur beschreiben und/oder die Umgebungsinformationen eine Umgebungstemperatur des Kraftfahrzeugs (1) und/oder prädiktive oder durch eine Navigationseinrichtung (16) bereitgestellte Streckendaten beschreiben.

8. Verfahren nach Anspruch 7,
**dadurch gekennzeichnet,**
**dass** die Steuereinrichtung (13) das Erwärmen bei Erreichen eines Schwellwerts durch die Temperatur und/oder den Ladezustand beginnt.

## Claims

1. Motor vehicle comprising at least one drive train component (10, 11) and/or at least one wheel bearing (12), wherein a heating device (8) designed for heating the drive train component (10, 11) and/or the wheel bearing (12), a recuperation brake (2) and a DC voltage converter (7) are provided, which DC voltage converter is connected on the input side to the recuperation brake (2) and on the output side to the heating device (8) and is designed to lower a voltage level of a recuperation power provided by the recuperation brake (2), wherein a control device (13) is provided, by means of which the heating device (8) and/or the DC voltage converter (7) can be controlled depending on operating information and/or environmental information of the motor vehicle (1), wherein the control device (13) is configured to carry out a control algorithm which evaluates the operating information and/or the environmental information, and describes an efficiency model of the drive train component (10, 11) and/or of the wheel bearing (12), wherein the heating power to be provided to the heating device (8) and/or a distribution of the heating power to the drive train component (10, 11) or drive train components and/or to the wheel bearing (12) or wheel bearings can be determined using the efficiency model.

2. Motor vehicle according to claim 1,
**characterised in**
**that** an output-side voltage of at most 60 Volts can be provided by means of the DC voltage converter (7).

3. Motor vehicle according to claim 1 or 2,
**characterised in**
**that** the operating information describes a state of charge and/or a battery temperature of a battery (3) of the motor vehicle (1), which is connected to store the recuperation power, and/or describes at least one temperature detected on the or a drive train component (10, 11) and/or on the or a wheel bearing (12), and/or the environmental information describes an environmental temperature of the motor vehicle (1) and/or route data that is predictive or provided by a navigation device (16).

4. Motor vehicle according to claim 3,
**characterised in**
**that** the control device (13) is configured to start the heating on reaching a threshold value due to the temperature and/or the state of charge.

5. Method for operating a motor vehicle (1) wherein at least one drive train component (10, 11) and/or at least one wheel bearing (12) of the motor vehicle (1) is heated by means of a heating device (8), and a DC voltage converter (7) which is connected on the input side to a recuperation brake (2) and on the output side to the heating device (8), lowers a voltage level of a recuperation power provided by the recuperation brake (2), wherein a control device (13) of the motor vehicle (1) controls the heating device (8) and/or the DC voltage converter (7) depending on operating information and/or environmental information of the motor vehicle (1), wherein the control device (13) executes a control algorithm which evaluates the operating information and/or the environmental information, and describes an efficiency model of the drive train component (10, 11) and/or of the wheel bearing (12), wherein the heating power to be provided to the heating device (8) and/or a distribution of the heating power to the drive train components (10, 11) and/or to the wheel bearings (12) is determined using the efficiency model.

6. Method according to claim 5,
**characterised in**
**that** the DC voltage converter (7) provides an output-side voltage of at most 60 Volts.

7. Method according to claim 5 or 6,
**characterised in**
**that** the operating information describes a state of charge and/or a battery temperature of a battery (3) of the motor vehicle (1), which is connected to store the recuperation power, and/or describes at least one temperature detected on the drive train component (10, 11) and/or on the wheel bearing (12) and/or the environmental information describes an environmental temperature of the motor vehicle (1) and/or route data that is predictive or provided by a navigation device (16).

8. Method according to claim 7,
**characterised in**
**that** the control device (13) starts the heating on reaching a threshold value due to the temperature and/or the state of charge.

## Revendications

1. Véhicule automobile, comprenant au moins un composant de chaîne cinématique (10, 11) et/ou au moins un palier de roue (12), dans laquelle un dispositif de chauffage (8) réalisé pour le chauffage du composant de chaîne cinématique (10, 11) et/ou du palier de roue (12), un frein de récupération (2) et un convertisseur de tension continue (7) sont prévus, lequel est relié côté entrée au frein de récupération (2) et côté sortie au dispositif de chauffage (8) et est réalisé pour l'abaissement d'une position de tension d'une puissance de récupération fournie par le frein de récupération (2), dans lequel un dispositif de commande (13) est prévu, au moyen duquel le dispositif de chauffage (8) et/ou le convertisseur de tension continue (7) peut être commandé en fonction d'informations de fonctionnement et/ou d'informations environnementales du véhicule automobile (1), dans lequel le dispositif de commande (13) est conçu pour la réalisation d'un algorithme de régulation évaluant les informations de fonctionnement et/ou les informations environnementales, décrivant un modèle de rendement de la chaîne cinématique (10, 11) et/ou du palier de roue (12), dans lequel la puissance de chauffage à fournir au dispositif de chauffage (8) et/ou une répartition de la puissance de chauffage sur le composant de chaîne cinématique (10, 11) ou les composants de chaîne cinématique et/ou le ou les paliers de roue (12) peut être déterminée au moyen du modèle de rendement.

2. Véhicule automobile selon la revendication 1,
**caractérisé en ce**
**qu'**une tension côté sortie d'au plus 60 volts peut être fournie au moyen du convertisseur de tension continue (7).

3. Véhicule automobile selon la revendication 1 ou 2,
**caractérisé en ce**
**que** les informations de fonctionnement décrivent un état de charge et/ou une température de batterie d'une batterie (3) du véhicule automobile (1) qui est connectée pour le stockage de la puissance de récupération, et/ou au moins une température détectée sur le ou un composant de chaîne cinématique (10, 11) et/ou sur le ou un palier de roue (12) et/ou les informations environnementales décrivent une température ambiante du véhicule automobile (1) et/ou des données de trajet prédictives ou fournies par un dispositif de navigation (16).

4. Véhicule automobile selon la revendication 3,
**caractérisé en ce**
**que** le dispositif de commande (13) est conçu afin de lancer le chauffage lors de l'atteinte d'une valeur seuil par la température et/ou l'état de charge.

5. Procédé de fonctionnement d'un véhicule automobile (1), dans lequel au moins un composant de chaîne cinématique (10, 11) et/ou au moins un palier de roue (12) du véhicule automobile (1) est chauffé au moyen d'un dispositif de chauffage (8), et un convertisseur de tension continue (7) qui est relié côté entrée à un frein de récupération (2) et côté sortie au dispositif de chauffage (8), abaisse une position de tension d'une puissance de récupération fournie par le frein de récupération (2), dans lequel un dispositif de commande (13) du véhicule automobile (1) commande le dispositif de chauffage (8) et/ou le convertisseur de tension continue (7) en fonction d'informations de fonctionnement et/ou d'informations environnementales du véhicule automobile (1), dans lequel le dispositif de commande (13) réalise un algorithme de régulation évaluant les informations de fonctionnement et/ou les informations environnementales, décrivant un modèle de rendement du composant de chaîne cinématique (10, 11) et/ou du palier de roue (12), dans lequel la puissance de chauffage à fournir au dispositif de chauffage (8) et/ou une répartition de la puissance de chauffage sur des composants de chaîne cinématique (10, 11) et/ou le ou les paliers de roue (12) est déterminée au moyen du modèle de rendement.

6. Véhicule automobile selon la revendication 5,
**caractérisé en ce**
**que** le convertisseur de tension continue (7) fournit une tension côté sortie d'au plus 60 volts.

7. Véhicule automobile selon la revendication 5 ou 6,
**caractérisé en ce**
**que** les informations de fonctionnement décrivent un état de charge et/ou une température de batterie d'une batterie (3) du véhicule automobile (1) qui est connectée pour le stockage de la puissance de récupération, et/ou au moins une température détectée sur le composant de chaîne cinématique (10, 11) et/ou sur le palier de roue (12) et/ou les informations environnementales décrivent une température ambiante du véhicule automobile (1) et/ou des données de trajet prédictives ou fournies par un dispositif de navigation (16).

8. Véhicule automobile selon la revendication 7,
**caractérisé en ce**
**que** le dispositif de commande (13) lance le chauffage lors de l'atteinte d'une valeur seuil par la température et/ou l'état de charge.
